# EUROPÄISCHE PATENTSCHRIFT

(11) **EP 3 166 453 B1**
(45) Veröffentlichungstag und Bekanntmachung des Hinweises auf die Patenterteilung: **27.01.2021**
(21) Anmeldenummer: 15727633.8
(22) Anmeldetag: 03.06.2015
(51) Int. Cl.: A47J 31/44

(54) **VORRICHTUNG ZUR ZUBEREITUNG VON BRÜHGETRÄNKEN, KAPSEL, KAPSELSYSTEM UND VERFAHREN ZUR HERSTELLUNG EINES BRÜHGETRÄNKES**
APPARATUS FOR PREPARING BREWED BEVERAGES, AND CAPSULE, CAPSULE SYSTEM AND METHOD FOR PRODUCING A BREWED BEVERAGE
DISPOSITIF DE PRÉPARATION DE BOISSONS INFUSÉES, CAPSULE, SYSTÈME DE CAPSULE ET PROCÉDÉ DE PRÉPARATION D'UNE BOISSON INFUSÉE

(30) Priorität: 11.07.2014 DE 102014109768
(43) Veröffentlichungstag der Anmeldung: 17.05.2017
(73) Patentinhaber: Melitta Single Portions GmbH & Co. KG, 32425 Minden (DE)
(72) Erfinder: HESSELBROCK, Katrin, 49086 Osnabrück (DE); NEUHAUS, Sven, 32549 Bad Oeynhausen (DE); PAHNKE, Jan, 32427 Minden (DE); SCHANDL, Gerold, 32425 Minden (DE); EBBECKE, Andreas, 65719 Hofheim (DE); LAASCH, Fabian, 61231 Bad Nauheim (DE); WEBER, Thomas, 64367 Mühltal (DE)
(74) Vertreter: Dantz, Jan Henning
(86) Internationale Anmeldenummer: PCT/EP2015/062362
(87) Internationale Veröffentlichungsnummer: WO 2016/005113

(56) Entgegenhaltungen:
- WO-A1-2016/005352
- DE-A1-102006 004 329
- US-A1- 2007 245 901
- US-A1- 2013 064 929
- US-A1- 2013 129 872

## Beschreibung

Die vorliegende Erfindung betrifft eine Vorrichtung zur Zubereitung von Getränken mit einer Brühkammer, an der ein Einlass für erhitztes Wasser und ein Auslass für das Brühgetränk vorgesehen sind, wobei die Brühkammer eine Öffnung aufweist, an der eine Kapsel mit für den Brühvorgang wirksamen Substanzen angeordnet werden kann, die eine zumindest teilweise mit der Brühkammer im Verbindung stehende Kapselöffnung und einen Boden gegenüber der Kapselöffnung aufweist, eine Kapsel, ein Kapselsystem für die Vorrichtung und ein Verfahren zur Herstellung eines Brühgetränkes.

Die US 2013/0064929 A1 offenbart eine Vorrichtung zur Zubereitung von Brühgetränken, bei der eine Kapsel eingesetzt wird, die drehbar an der Vorrichtung gehalten ist. An der Kapsel befinden sich auslesbare Codierungen, und durch Drehen der Kapsel um eine Rotationsachse kann die Codierung über ein Lesegerät ausgelesen werden.

Die EP 1 786 303 offenbart eine Vorrichtung zur Zubereitung eines Getränks, die eine Erfassungseinrichtung zur Erkennung einer Identifikationsmarkierung an einer Portionspackung aufweist. Die Erfassungseinrichtung ist dabei an einer Gleitschiene zur Führung der Portionspackung angeordnet und führt eine Farberkennung durch, indem reflektiertes Licht einer Diode erfasst wird. Eine solche Erfassung ist allerdings fehleranfällig, gerade wenn die Verpackung an der Außenseite Verunreinigungen aufweist oder die Farben an den Verpackungen Licht in einem ähnlichen Frequenzspektrum reflektieren.

Die WO 2007/087890 offenbart eine weitere Vorrichtung für die Zubereitung von Heißgetränken, bei der eine Erkennungseinheit zum Auslesen eines an den Kartuschen vorgesehenen Codes vorgesehen ist. Die Erkennungseinheit umfasst einen Strahlungsemitter und einen Strahlungsdetektor, wobei die Strahlung durch den Rand einer Kartusche durchgeleitet wird. An dem Rand sind Mittel zur Codierung vorgesehen, so dass eine Erkennung der Kartusche erfolgen kann. Auch bei diesem Erkennungssystem besteht der Nachteil, dass der Rand der Kartusche während des Gebrauchs zum Einlegen der Kartusche gegriffen wird und daher leicht verunreinigt werden kann. Dies kann zu Fehlern bei der Erkennung führen. Zudem kann der Kartuschenrand auch leicht verformt oder beschädigt werden.

Es ist daher Aufgabe der vorliegenden Erfindung, eine Vorrichtung zur Zubereitung von Brühgetränken zu schaffen, die eine zuverlässige Erkennung einer Codierung an einer Kapsel ermöglicht. Zudem soll eine Kapsel für eine solche Vorrichtung sowie ein Kapselsystem bereitgestellt werden.

Diese Aufgabe wird mit einer Vorrichtung mit den Merkmalen des Anspruches 1, einer Kapsel mit den Merkmalen des Anspruches 10, einem Kapselsystem mit den Merkmalen des Anspruches 14 und einem Verfahren mit den Merkmalen des Anspruches 15 gelöst.

Erfindungsgemäß ist für die Kapselerkennung benachbart zu dem Boden der Kapsel mindestens eine Lichtquelle vorgesehen, die über eine Eintrittsfläche Licht in den Boden emittiert, wobei in dem Boden mindestens ein Lichtleiter vorgesehen ist, mittels dem das in den Boden emittierte Licht zu mindestens einer Auskoppelfläche am Boden der Kapsel geleitet wird und ein Lichtdetektor gegenüber der mindestens einen Auskoppelfläche angeordnet ist. Dadurch kann die Funktion der Kapselerkennung komplett auf den Boden der Kapsel verlagert werden, der weitaus weniger verschmutzungsanfällig ist als ein hervorstehender Rand oder eine andere Außenfläche an der Kapsel, die bei der Benutzung gegriffen wird und verunreinigt werden kann. Zudem ist die Kapselerkennung zuverlässig, da eine Erfassung über Licht erfolgt, das in den Boden der Kapsel eingeleitet wird und an mindestens einer Auskoppelfläche ausgegeben wird. Dadurch können Lichtdetektoren eingesetzt werden, die selbst bei geringen Verunreinigungen am Boden bei der Erfassung fehlerunanfällig sind.

Gemäß einer bevorzugten Ausgestaltung der Erfindung sind in dem Boden mehrere Lichtleiter vorgesehen, in die jeweils Licht von einer Eintrittsfläche zu einer Auskoppelfläche am Boden der Kapsel leitbar ist. Dabei kann in dem Boden der Kapsel benachbart zu einer Eintrittsfläche und/oder einer Auskoppelfläche eine Lichtumlenkvorrichtung vorgesehen sein. Dies ermöglicht eine Kapselerkennung mit nur einer Lichtquelle und mehreren Lichtdetektoren oder einem Lichtdetektor und mehreren Lichtquellen.

Für einen besonders kompakten Aufbau kann in jedem Lichtleiter nach der Eintrittsfläche eine erste Lichtumlenkvorrichtung und vor der Auskoppelfläche eine weitere zweite Lichtumlenkvorrichtung vorgesehen sein, um das Licht aus dem Lichtleiter zu den Lichtdetektoren zu emittieren. Dadurch kann der Lichtleiter sehr flach innerhalb des Bodens angeordnet werden, so dass die Codierung und das Erkennungsmittel für den Benutzer nicht störend sind. Das Licht kann dabei im Wesentlichen senkrecht zu einer Ebene des Bodens zu dem Lichtdetektor emittiert werden, so dass ausgehend von der Lichtquelle eine Umlenkung des Lichtes um etwa 180° erfolgt, vorzugsweise in einem Bereich zwischen 140° und 220°. Das Licht kann innerhalb des Bodens im Wesentlichen parallel oder in einem leichten Winkel von unter 30° zur Ebene des Bodens geleitet werden, so dass der Boden flach aufgebaut ist. Zusätzlich ermöglicht diese Anordnung, dass die Licht sendenden und empfangenden Elemente nebeneinander in einer Ebene platziert werden können.

Für eine Erkennung unterschiedlicher Kapseltypen sind vorzugsweise vier Lichtleiter vorgesehen, die das Licht von einer Eintrittsfläche zu vier Auskoppelflächen oder von vier Eintrittsflächen zu einer Auskoppelfläche leiten.

Für eine sichere Erkennung umfasst die Vorrichtung vorzugsweise eine Positioniereinrichtung, die mit einem Positioniermittel der Kapsel zusammenwirkt, um die Kapsel in einer vorbestimmten Position und Ausrichtung an der Brühkammer anzuordnen. In der Position benachbart zu der Brühkammer erfolgt dann eine Kapselerkennung, um die Information für den Brühvorgang zu verarbeiten. Vorzugsweise weist die Vorrichtung hierfür eine Steuerung auf, die basierend auf den Informationen der Lichtdetektoren Parameter für den Brühvorgang steuert, beispielsweise die Brühzeit, die Temperatur des eingeleiteten Wassers oder weitere Parameter.

Erfindungsgemäß wird auch eine Kapsel für eine Vorrichtung zur Zubereitung von Brühgetränken bereitgestellt, die am Boden mindestens einen Lichtleiter aufweist, um das von der Vorrichtung emittierte Licht zu mindestens einer Auskoppelfläche am Boden der Kapsel zu leiten. Dadurch wird eine störungsunanfällige Detektion der Kapsel ermöglicht. Die Kapsel weist vorzugsweise an mindestens einer Eintrittsfläche und/oder Auskoppelfläche zumindest eine verminderte Lichtdurchlässigkeit auf. Dadurch kann für die Codierung an dem Lichtdetektor erfasst werden, ob die Auskoppelfläche lichtdurchlässig ist oder nur vermindert bis gar nicht lichtdurchlässig ist. Zur Verminderung der Lichtdurchlässigkeit kann an mindestens einer Eintrittsfläche und/oder Auskoppelfläche eine Beschichtung, ein Etikett, oder eine mechanische, thermische oder chemische Veränderung der Oberfläche vorgesehen sein. Der Lichtdetektor erkennt dann, dass an der Auskoppelfläche eine Belegung vorhanden ist und somit kein Licht detektiert wird, was zur Bestimmung des Kapseltyps ausreichend ist.

Der Lichtdetektor misst vorzugsweise die Lichtintensität des aus der Auskoppelfläche ausgestrahlten Lichtes, so dass durch eine Veränderung im Bereich des Strahlungsweges des Lichtes von der Lichtquelle zu dem Lichtdetektor eine Verringerung der Lichtdurchlässigkeit erhalten werden kann. Dabei ist es auch möglich, statt der Eintrittsfläche und der Auskoppelfläche den Lichtleiter zu bearbeiten, um die Lichtdurchlässigkeit zu verringern. Beispielsweise kann in dem Lichtleiter ein Schnitt oder eine Nut eingebracht werden, um den Strahlungsweg von der Eintrittsfläche zu der Auskoppelfläche zu stören und so eine Codierung der Kapsel zu erhalten.

Wenn an der Kapsel vier Auskoppelflächen vorgesehen sind, kann bei der Kapselerfassung an der Auskoppelfläche von vier Lichtleitern erkannt werden, ob diese lichtdurchlässig oder nicht lichtdurchlässig sind. Dies ermöglicht die Bereitstellung eines Kapselsystems mit 16 unterschiedlichen Kapseltypen, was für die meisten Brühgetränke ein ausreichendes Spektrum darstellt.

Die Kapsel ist vorzugsweise im Wesentlichen topfförmig ausgebildet und weist eine Kapselöffnung auf, die mit einem Sieb oder einem Filterelement flüssigkeitsdurchlässig verschlossen ist. Dadurch kann über die Kapselöffnung eine Kommunikation mit einem Innenraum der Brühkammer stattfinden, während auf der gegenüberliegenden Seite am Boden eine Kapselerkennung stattfindet.

Erfindungsgemäß wird auch ein Kapselsystem für eine Vorrichtung bereitgestellt, bei dem mehrere Kapseln vorgesehen sind, die an den Auskoppelflächen unterschiedlich gestaltet sind.

Bei einem Verfahren zur Herstellung eines Brühgetränkes wird zunächst eine Kapsel in einen Einwurfschacht eingegeben und benachbart zu einer Brühkammer angeordnet. Dann wird eine Codierung an der Kapsel ausgelesen, wobei benachbart zu einem Boden der Kapsel mindestens eine Lichtquelle vorgesehen ist, die Licht in den Boden emittiert, wobei in dem Boden mindestens ein Lichtleiter vorgesehen ist, mittels dem das in den Boden emittierte Licht zu mindestens einer Auskoppelfläche am Boden der Kapsel geleitet wird und ein Lichtdetektor zum Auslesen der Codierung gegenüber der mindestens einen Auskoppelfläche angeordnet ist. Anschließend wird heißes Wasser in die Brühkammer zur Herstellung eines Brühgetränkes abhängig von der ausgelesenen Codierung eingefüllt.

Vorzugsweise können bei dem Verfahren mehrere Lichtquellen vorgesehen sein, die nach dem Anordnen der Kapsel benachbart zu der Brühkammer nacheinander Licht an unterschiedlichen Stellen in den Boden emittieren und das emittierte Licht an einen einzigen Lichtdetektor geleitet und erfasst wird. Dadurch kann mit nur einem einzigen Lichtdetektor eine Codierung ausgelesen werden, wobei das Einleiten von Licht in die Eintrittsflächen am Boden zeitlich nacheinander erfolgen kann, so dass eine mit dem Lichtdetektor verbundene Steuerung weiß, welcher Lichtleiter gerade durch das Einleiten von Licht abgefragt wird.

Die Erfindung wird nachfolgend anhand eines Ausführungsbeispiels mit Bezug auf die beigefügten Zeichnungen näher erläutert. Es zeigen:
- Figur 1: eine schematische Ansicht einer erfindungsgemäßen Vorrichtung zur Zubereitung von Brühgetränken;
- Figur 2: eine schematische Ansicht der Kapselerkennung der Vor-richtung der Figur 1;
- Figuren 3A bis 3C: mehrere Ansichten einer erfindungsgemäßen Kapsel;
- Figur 4: eine Ansicht einer modifizierten Ausführungsform einer Kapsel, und
- Figur 5.: eine Ansicht einer weiteren modifizierten Ausführungs-form einer Kapsel.

Eine Vorrichtung 1 zur Zubereitung von Brühgetränken umfasst einen herausnehmbaren Sammelbehälter 2, der in einem Gehäuse angeordnet ist. An dem Sammelbehälter 2 ist eine Auflage 3 mit Öffnungen zum Abstellen eines Gefäßes 4 angeordnet. Unterhalb der Auflage 3 ist ein Griffabschnitt 5 zum Herausziehen des Sammelbehälters 2 vorgesehen.

Die Vorrichtung 1 zur Zubereitung von Brühgetränken umfasst ferner eine Brühkammer 6, die neben einem Einwurfschacht 7 für Kapseln vorgesehen ist.

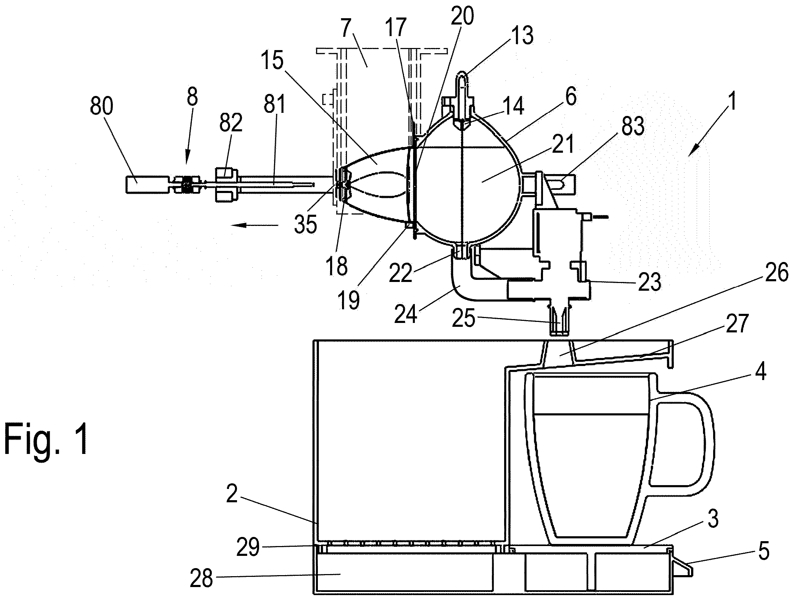

Wie in Figur 1 gezeigt ist, befindet sich der Einwurfschacht 7 für Kapseln zwischen der Brühkammer 6 und einer Antriebseinrichtung 8. Über die Antriebseinrichtung 8 kann die Brühkammer 6 relativ zu dem Einwurfschacht 7 verfahren werden. Hierfür ist ein Elektromotor 80 vorgesehen, der über ein Getriebe eine Spindel 81 antreibt, auf der eine Spindelmutter 82 drehfest gelagert ist. Durch Drehen der Spindel 81 werden mit der Spindelmutter 82 verbundene Arme entlang einer Führung 83 linear verfahren. Die Arme umgreifen die Brühkammer 6 an gegenüberliegenden Seiten und können diese linear bewegen.

Die Vorrichtung 1 zur Zubereitung von Brühgetränken umfasst ferner einen nicht dargestellten Tank für Frischwasser, der abnehmbar ausgebildet sein kann. Der Tank ist mit einer Pumpe verbunden, mittels der Wasser zu einer Heizeinrichtung gefördert wird, die mit einer Einlassleitung 13 oberhalb der Brühkammer 6 verbunden ist.

In dem Einwurfschacht 7 ist eine Kapsel 15 angeordnet, die topfförmig ausgebildet ist und an einer Seite eine Öffnung aufweist, die mit einem Sieb verschlossen ist. Das Sieb 31 ist dabei an einem Rand 16 fixiert, der asymmetrisch ausgebildet ist und an einer Seite einen hervorstehenden Abschnitt 17 mit einem Positionierungsmittel aufweist. Die Kapsel 15 wird dadurch in einer vorbestimmten Position und Ausrichtung in den Einwurfschacht 7 eingeworfen, der eine entsprechende Aussparung mit Führungsmitteln für die Positionierung der Kapsel 15 aufweist. Auf der zur Öffnung gegenüberliegenden Seite weist die Kapsel 15 einen Boden 18 auf, an dem Markierungen zur Identifizierung der Kapsel 15 angeordnet sind. Durch ein Auslesen der Codierung der Kapsel 15 an der Vorrichtung kann über eine Steuerung die Füllmenge an heißem Wasser für die Brühkammer 6, die Temperatur und die Verweilzeit eingestellt werden. Auch die Steuerung anderer Parameter über die Codierung ist möglich.

Für den Brühvorgang wird die Kapsel 15 zunächst in den Einwurfschacht 7 eingefügt. Die Kapsel 15 gleitet nach unten, bis sie an einer seitlichen Öffnung der Brühkammer 6 angeordnet ist. Hierfür sind an der Außenseite der Brühkammer 6 Halter 19 vorgesehen, die verhindern, dass die Kapsel 15 nach unten herausrutscht. In Figur 1 ist die Brühposition gezeigt, in die die Brühkammer 6 nach dem Einwerfen der Kapsel 15 über den Elektromotor 80 verfahren wird, wie dies mit dem Pfeil dargestellt ist. Dadurch wird eine Dichtung benachbart zu der Öffnung an der Brühkammer 6 gegen den Rand 16 der Kapsel 15 gedrückt. Die Kapsel 15 und ein Innenraum 21 der Brühkammer 6 bilden somit eine Einheit, wobei der Innenraum 21 der Brühkammer 6 und das Innere der Kapsel 15 durch das Sieb 31 voneinander getrennt sind. Der Innenraum 21 der Brühkammer 6 ist dabei ein Vielfaches größer als ein Innenraum der Kapsel 15, beispielsweise um mehr als vier mal so groß, so dass das Brühgetränk sich vorwiegend in der Brühkammer 6 befindet und nur ein kleinerer Teil in der Kapsel 15, was das Ausgeben des Brühgetränkes vereinfacht.

In der Brühposition wird nun über die Einlassleitung 13 heißes Wasser aus der Heizeinrichtung in die Brühkammer 6 eingeleitet, wobei hierfür am Ende der Einlassleitung 13 eine Düse 14 vorgesehen ist, die mit einer Spitze in den Innenraum 21 der Brühkammer 6 hervorsteht. Die Brühkammer 6 ohne Kapsel kann ein Volumen zwischen 0,1 bis 1,0 l, insbesondere 0,15 bis 0,7 l besitzen, je nach Anzahl der herzustellenden Brühgetränke. Die Brühkammer 6 weist am unteren Ende einen Auslass 22 auf, der über eine Leitung 24 mit einem Ventil 23 verbunden ist. Durch Schließen des Ventils 23 wird das eingeleitete heiße Wasser in der Brühkammer 6 gesammelt und steigt über den Auslass 22 an, um das in der Kapsel 15 enthaltene Material zum Brühen eines Getränkes, insbesondere Tee, zu erreichen. Durch ein vorheriges Auslesen der Codierung an der Kapsel 15 durch ein Lesegerät 35 kann über die Steuerung die Zubereitung des Brühgetränkes individuell angepasst werden, beispielsweise kann grüner Tee anders zubereitet werden als schwarzer Tee, Früchtetee oder ein anderes Brüh- oder Aufgussgetränk.

Nach dem Brühvorgang kann das Ventil 23 geöffnet werden, damit das Brühgetränk aus der Brühkammer 6 über den Auslass 22, die Leitung 24 in einen Auslassstutzen 25 strömt, von dem es in ein Gefäß 4 eingeleitet wird. Zwischen dem Auslassstutzen 25 und dem Gefäß 4 befindet sich eine Durchführung 26 bzw. eine Öffnung, so dass das heiße Getränk ungehindert in das Gefäß 4 einströmen kann. Nach der Zubereitung des Brühgetränks kann das Ventil 23 wieder geschlossen werden.

Nach der Getränkeausgabe kann die Brühkammer 6 über die Antriebseinrichtung 8 weg von der Kapsel 15 verfahren werden, so dass die Kapsel 15 aus der Halteposition benachbart zu der seitlichen Öffnung 20 an der Brühkammer 6 entfernt wird und nach unten herabfällt. Die Kapsel 15 fällt dabei in den Sammelbehälter 2 auf ein Sieb 29 oder ein Gitter, das oberhalb eines Sammelbeckens 28 angeordnet ist. Durch das Verfahren der Brühkammer 6 werden gleichzeitig auch die Leitung 24 und der Auslassstutzen 25 verfahren, der nun nicht mehr über der Durchführung 26, sondern über einem Leitelement 27 angeordnet ist. Nun können die Brühkammer 6 und alle weiteren mit Tee benetzten Leitungen gespült werden, indem heißes Wasser aus der Heizeinrichtung über die Düse 14 in die Brühkammer 6 eingespritzt wird, so dass das heiße Wasser Rückstände des Brühvorganges entfernen kann. Das heiße Wasser kann dabei teilweise durch die Öffnung 20 in den Sammelbehälter 2 direkt eingeleitet werden und wird ansonsten über den Auslass 22 und die Leitung 24 in den Auslassstutzen 25 eingeleitet. Von dort gelangt das Spülwasser auf das Leitelement 27, das als schräger Boden oberhalb des Gefäßes 4 ausgebildet ist. Über das Leitelement 27 gelangt das Spülwasser in das Sammelbecken 28 des Sammelbehälters 2. Das Leitelement 27 kann statt als schräger Boden auch als Kanal oder Rinne ausgebildet sein.

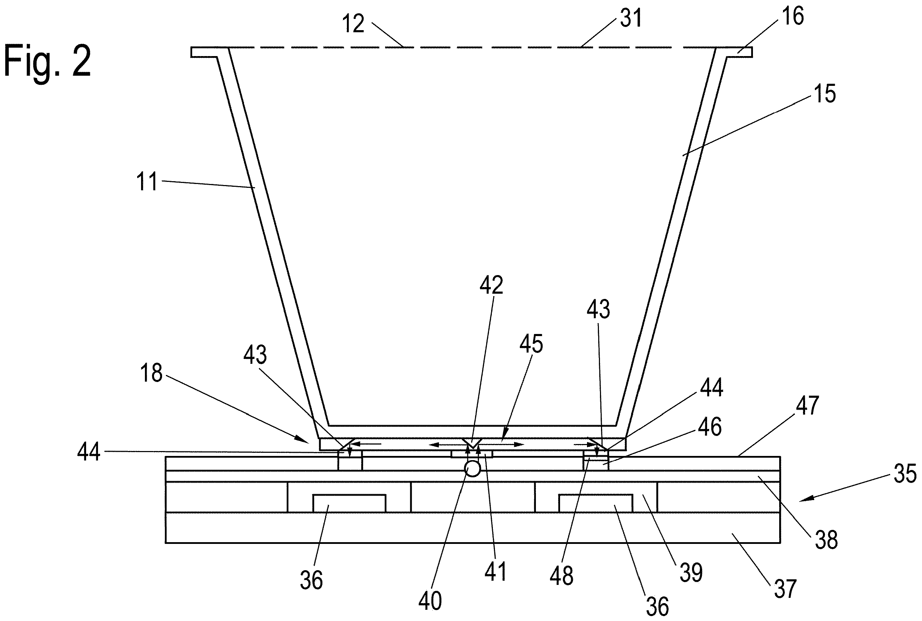

In Figur 2 ist eine Kapsel 15 schematisch dargestellt, die an dem Lesegerät 35 angeordnet ist. Die Kapsel 15 weist an einer Seitenwand 11 einen oberen Rand 16 auf, an dem eine Kapselöffnung 12 vorgesehen ist. Die Kapselöffnung 12 ist durch ein Sieb 31 verschlossen, so dass eine extrahierbare Substanz nicht aus der Kapsel 15 entweichen kann.

Auf der zur Kapselöffnung 12 gegenüberliegenden Seite ist an dem Boden 18 das Lesegerät 35 vorgesehen. Das Lesegerät 35 umfasst eine Lichtquelle 40, die mittig an dem Boden 18 angeordnet ist. Von der Lichtquelle 40 wird Licht an einer Eintrittsfläche 41 in der Mitte des Bodens 18 eingestrahlt, die in Lichtleiter 45 verteilt wird. Hierfür ist eine erste mittig angeordnete Lichtumlenkvorrichtung 42 vorgesehen, mittels der eintretende Lichtstrahlen, die im Wesentlichen senkrecht zur Ebene des Bodens 18 auftreffen, etwa rechtwinklig umgelenkt werden und durch Lichtleiter geleitet werden. Beabstandet von der ersten Lichtumlenkvorrichtung 42 sind mehrere zweite Lichtumlenkvorrichtungen 43 vorgesehen, die dafür sorgen, dass Licht von der ersten Lichtumlenkvorrichtung 42 umgelenkt und zu einer Auskoppelfläche 44 am Boden 18 geleitet wird.

Die Auskoppelfläche 44 ist gegenüber einer Öffnung 46 oder einem Fenster an einer Blende 47 angeordnet. Durch die Öffnung 46 gelangt das Licht zu einem Lichtdetektor 36 des Lesegerätes 35. Der Lichtdetektor 36 ist dabei geschützt hinter einer Scheibe 38 angeordnet.

An dem Boden 18 sind mehrere Auskoppelflächen 44 vorgesehen, vorzugsweise zwischen zwei und acht Auskoppelflächen 44, insbesondere vier Auskoppelflächen 44, so dass für jede Auskoppelfläche 44 ein Lichtdetektor 36 am Lesegerät 35 vorgesehen ist. Die Lichtdetektoren 36 sind dabei an einem Träger 37 gehalten und mit einer Steuerung der Vorrichtung 1 verbunden.

Es ist natürlich auch möglich, statt einer Lichtquelle 40 vier Lichtquellen vorzugsehen, die benachbart zu den Auskoppelflächen 44 angeordnet sind. Dann werden die Auskoppelflächen 44 zu Eintrittsflächen für das Licht und die mittig angeordnete Eintrittsfläche 41 wird zu einer Auskoppelfläche. Dann muss lediglich ein einziger Lichtdetektor benachbart zu der mittleren Eintrittsfläche 41 angeordnet werden, die dann zur Auskoppelfläche wird. Die Strahlungsrichtung des Lichtes wird bei diesem Ausführungsbeispiel umgekehrt. Dabei kann das Einstrahlen des Lichts zeitlich nacheinander erfolgen, so dass auch das Auslesen der einzelnen Lichtleiter 45 getrennt erfolgen kann.

Wird Licht über die Lichtquelle 40 in den Boden 18 eingestrahlt, kann ein vorbestimmter Kapseltyp erkannt werden, der an den Auskoppelflächen 44 wahlweise lichtdurchlässig ausgebildet ist, so dass an dem Lichtdetektor 36 reflektierendes Licht erfasst wird, oder die Auskoppelfläche 44 weist eine verminderte Lichtdurchlässigkeit auf. Hierfür kann an der Auskoppelfläche 44 eine Abdeckung 48, ein Etikett, eine Beschichtung oder ein anderes Mittel vorgesehen sein, um die Lichtdurchlässigkeit zu verringern. Hierfür kann die Oberfläche auch mechanisch, thermisch oder chemisch verändert sein, so dass der benachbart angeordnete Lichtdetektor 36 kein reflektiertes Licht empfängt.

Zur Verminderung der Lichtdurchlässigkeit ist es auch möglich, den Lichtleiter mit entsprechenden Mitteln zu versehen, beispielsweise durch ein oder mehrere Einschnitte. Auch diese Mittel am Lichtleiter können für eine Codierung der Kapsel verwendet werden.

Über das Lesegerät 35 wird somit ein bestimmter Kapseltyp erkannt, so dass für den Brühvorgang die Temperatur des einzuleitenden Wassers in die Brühkammer 6 und/oder die Brühzeit oder andere Parameter gesteuert werden können. Beispielsweise kann es zum Brühen von grünem Tee sinnvoll sein, die Brühtemperatur geringer anzusetzen als bei schwarzem Tee und zudem die Ziehzeit zu reduzieren. Je nachdem, was für ein Brühgetränk zubereitet wird, beispielsweise grüner Tee, schwarzer Tee, Früchtetee, weißer Tee oder andere Teesorten, kann somit eine optimierte Zubereitung erfolgen.

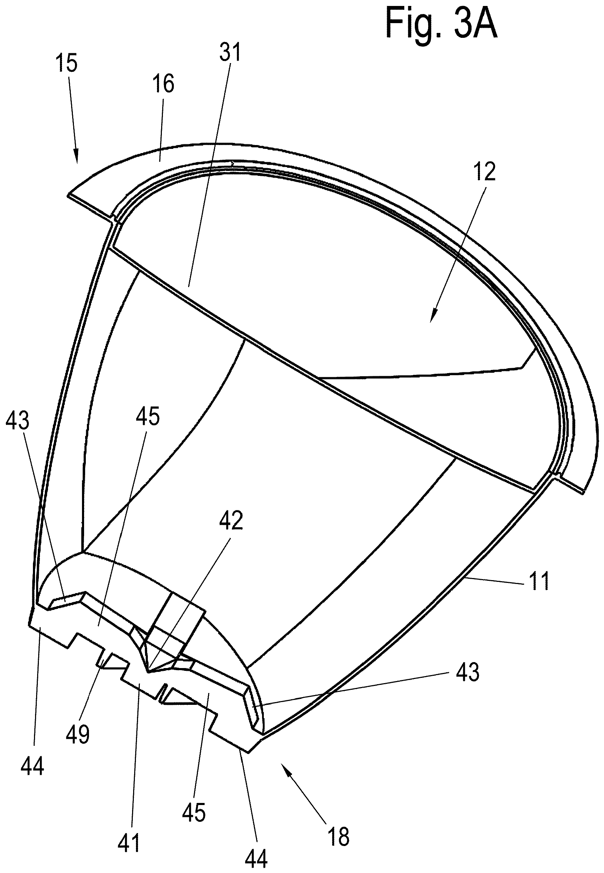

In den Figuren 3A bis 3C ist eine Kapsel 15 mit einem Boden 18 mit Lichtleitern 45 dargestellt. An dem Boden 18 befindet sich eine mittig angeordnete Eintrittsfläche 41, und Licht trifft auf die erste Lichtumlenkvorrichtung 42 auf, wobei Licht in vier Lichtleiter 45 eingestrahlt wird, die kreuzförmig angeordnet sind. In einem vorbestimmten Abstand von der ersten Lichtumlenkvorrichtung 42 sind vier zweite Lichtumlenkvorrichtungen 43 vorgesehen, die dann Licht an vier Auskoppelflächen 44 emittieren.

Die Lichtleiter 45 sind im Wesentlichen parallel zur Ebene des Bodens 18 ausgerichtet, was zu einem kompakten Aufbau führt. Dadurch ist der Boden 18 im Innenbereich etwas uneben im Bereich der Lichtleiter 45, was allerdings den Brühvorgang nicht nachteilig beeinflusst. Zudem kann bei Bedarf auch eine Abdeckung vorgesehen werden, so dass ein glatter innerer Boden an der Kapsel 15 vorgesehen wird.

In dem dargestellten Ausführungsbeispiel sind vier Auskoppelflächen 44 vorgesehen, an denen jeweils ein Lichtdetektor 36 das Emittieren von Licht erfasst oder auch nicht erfasst. Dadurch ergeben sich am Boden 18 der Kapsel 15 vier Codierungen, so dass 16 unterschiedliche Kapseltypen erkannt werden können. Es ist natürlich auch möglich, die Anzahl der Auskoppelflächen 44 und Lichtdetektoren 36 zu variieren. Das Licht kann dabei im Wesentlichen senkrecht zu einer Ebene des Bodens 18 zu dem Lichtdetektor emittiert werden, so dass ausgehend von der Lichtquelle 40 eine Umlenkung des Lichtes um etwa 180° erfolgt, vorzugsweise in einem Bereich zwischen 140° und 220°. Das Licht kann innerhalb des Bodens im Wesentlichen parallel oder in einem leichten Winkel von unter 30° zur Ebene des Bodens 18 geleitet werden.

Die Lichtleiter 45 und Umlenkvorrichtungen 42 und 43 können aus transparentem oder transluzentem Kunststoff oder anderen geeigneten Materialien hergestellt sein. Die Umlenkvorrichtungen 42 und 43 können auch als Spiegelflächen oder reflektierende Flächen ausgebildet sein, die einstrahlendes Licht in der Richtung umlenken.

Die Lichtleiter 45 können nur aus transparentem oder transluzentem Kunststoff hergestellt sein, es ist aber auch möglich, eine Mantel vorzusehen, vorzugsweise aus reflektierendem Material, um die Lichtintensität an der Auskoppelfläche zu erhöhen.

Statt der gezeigten vier Auskoppelflächen 44, die punktsymmetrisch konzentrisch zu einem Mittelpunkt des Bodens 18 angeordnet sind, können auch andere Auskoppelflächen vorgesehen sein, beispielsweise ringförmige Auskoppelflächen, so dass beim Einwerfen der Kapsel 15 in den Einwurfschacht 7 keine Ausrichtung der Kapsel 15 erfolgen muss. Dann können die ringförmigen Auskoppelflächen für die Erkennung des Kapseltyps eingesetzt werden.

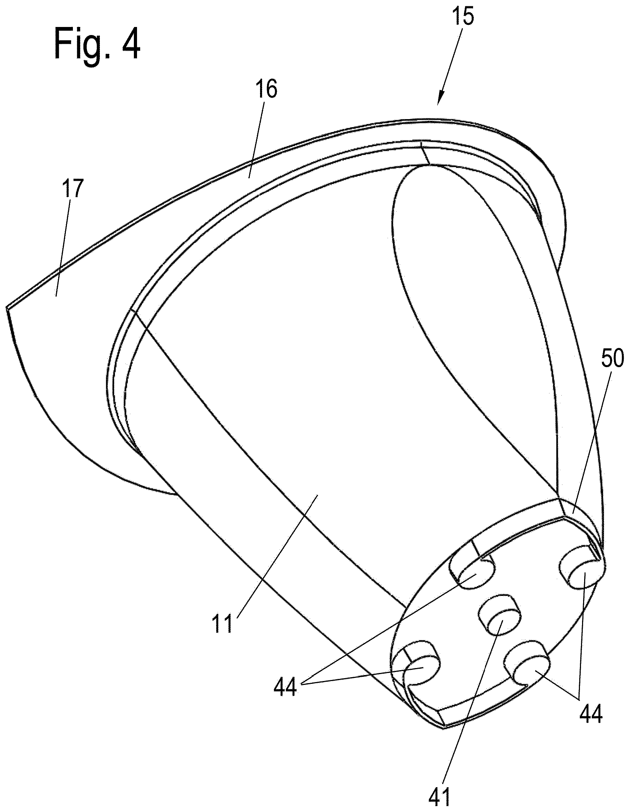

Die Kapsel 15 weist am Boden 18 außermittige Führungsleisten 49 und einen äußeren Rand 50 auf, die mit Führungsmitteln an dem Einwurfschacht 7 zusammenwirken, um eine Führung und Ausrichtung der Kapsel 15 zu bewirken. In Figur 4 ist eine modifizierte Kapsel 15' gezeigt, bei der am Boden 18 keine Führungsmittel 49 sondern nur der äußere Rand 50 vorgesehen ist. Im Übrigen entspricht die Kapsel 15' dem vorangegangenen Ausführungsbeispiel.

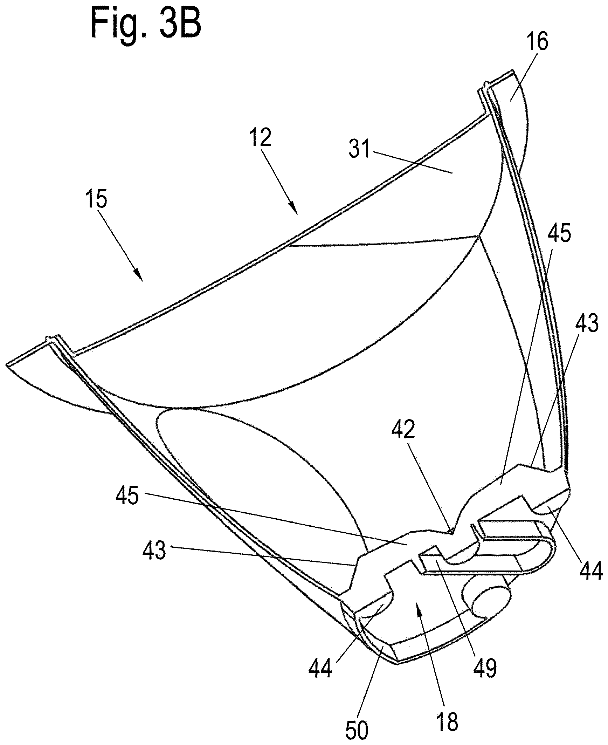

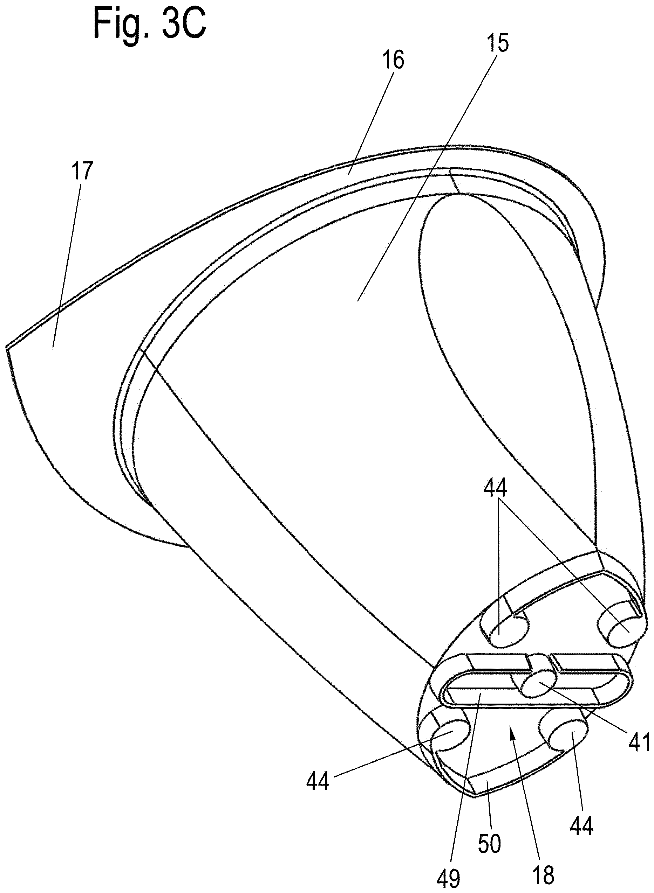

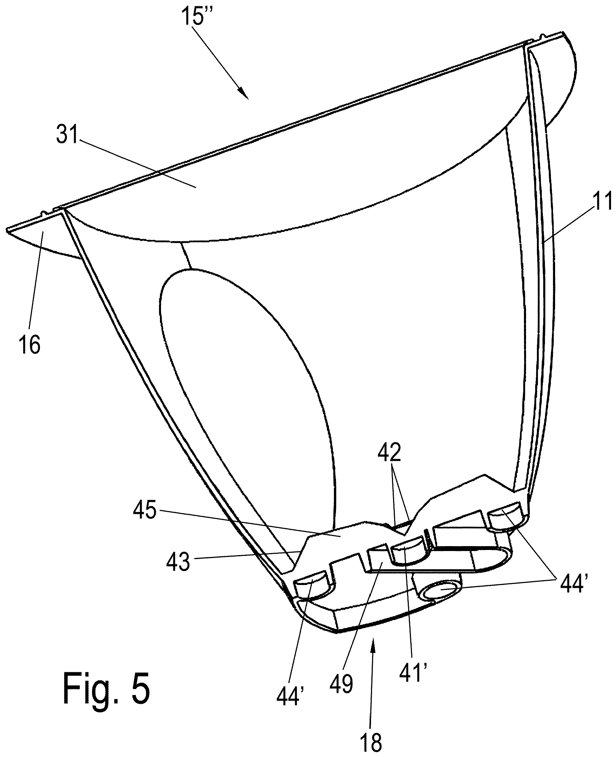

In Figur 5 ist eine gegenüber Figur 3 modifizierte Ausführungsform einer Kapsel 15" gezeigt. An dem Boden 18 befindet sich eine mittig angeordnete Eintrittsfläche 41', die Licht zu der ersten Lichtumlenkvorrichtung 42 leitet, damit Licht in vier Lichtleiter 45 eingestrahlt wird, die kreuzförmig angeordnet sind. Ferner sind vier zweite Lichtumlenkvorrichtungen 43 vorgesehen, die dann Licht an vier Auskoppelflächen 44' emittieren. Die Auskoppelflächen 44' und die eine Einkoppelfläche 41' sind jeweils in einer tassenförmigen Aufnahme geschützt angeordnet. Die parallel zur Fläche des Bodens 18 ausgerichteten Aus- und Einkoppelflächen 44' und 41' sind somit durch einen nach unten hervorstehenden Rand geschützt angeordnet. Die Höhe des vorzugsweise ringförmigen Randes liegt in einem Bereich zwischen 0,3mm und 8mm, insbesondere 1mm bis 5mm. Ferner ist ein Sieb 31 an dem oberen Rand 16 der Kapsel 15" fixiert.

### Bezugszeichenliste

- 1: Vorrichtung
- 2: Sammelbehälter
- 3: Auflage
- 4: Gefäß
- 5: Griffabschnitt
- 6: Brühkammer
- 7: Einwurfschacht
- 8: Antriebseinrichtung
- 11: Seitenwand
- 12: Kapselöffnung
- 13: Einlassleitung
- 14: Düse
- 15: Kapsel
- 16: Rand
- 17: Abschnitt
- 18: Boden
- 19: Halter
- 20: Öffnung
- 21: Innenraum
- 22: Auslass
- 23: Ventil
- 24: Leitung
- 25: Auslassstutzen
- 26: Durchführung
- 27: Leitelement
- 28: Sammelbecken
- 29: Sieb
- 31: Sieb
- 32: Dichtung
- 33: Vorsprung
- 35: Lesegerät
- 36: Lichtdetektor
- 37: Träger
- 38: Scheibe
- 40: Lichtquelle
- 41: Eintrittsfläche
- 42: Lichtumlenkvorrichtung
- 43: Lichtumlenkvorrichtung
- 44: Auskoppelfläche
- 45: Lichtleiter
- 46: Öffnung
- 47: Blende
- 48: Abdeckung
- 49: Führungsleisten
- 50: Rand
- 50: Gehäuse
- 80: Elektromotor
- 81: Spindel
- 82: Spindelmutter
- 83: Führung
- 84: Halter

## Patentansprüche

1. Vorrichtung (1) zur Zubereitung von Brühgetränken, mit einer Brühkammer (6), an der ein Einlass für erhitztes Wasser und ein Auslass (22) für das Brühgetränk vorgesehen sind, wobei die Brühkammer (6) eine Öffnung (20) aufweist, an der eine Kapsel (15) mit für den Brühvorgang wirksamen Substanzen angeordnet werden kann, die eine zumindest teilweise mit der Brühkammer (6) im Verbindung stehende Kapselöffnung (12) und einen Boden (18) gegenüber der Kapselöffnung (12) aufweist, **dadurch gekennzeichnet, dass** benachbart zu dem Boden (18) der Kapsel (15) mindestens eine Lichtquelle (40) vorgesehen ist, die an einer Eintrittsfläche (41) Licht in den Boden (18) emittiert, wobei in dem Boden (18) mindestens ein Lichtleiter (45) vorgesehen ist, mittels dem das in den Boden (18) emittierte Licht zu mindestens einer Auskoppelfläche (44) am Boden (18) der Kapsel (15) geleitet wird und ein Lichtdetektor (36) gegenüber der mindestens einen Auskoppelfläche (44) angeordnet ist.

2. Vorrichtung nach Anspruch 1, **dadurch gekennzeichnet, dass** in dem Boden (18) mehrere Lichtleiter (45) vorgesehen sind, durch die jeweils Licht von einer Eintrittsfläche (41) zu einer Auskoppelfläche (44) am Boden (18) der Kapsel (15) leitbar ist.

3. Vorrichtung nach Anspruch 2, **dadurch gekennzeichnet, dass** in dem Boden (18) der Kapsel (15) benachbart zu einer Eintrittsfläche (41) und/oder einer Auskoppelfläche (44) eine Lichtumlenkvorrichtung (42, 43) vorgesehen ist, mittels der das Licht der Lichtquelle (40) in einen Lichtleiter (45) eingeleitet oder von dem Lichtleiter (45) auf die Auskoppelfläche (44) ausgestrahlt wird.

4. Vorrichtung nach einem der vorhergehenden Ansprüche, **dadurch gekennzeichnet, dass** in jedem Lichtleiter (45) nach der Eintrittsfläche (41) eine erste Lichtumlenkvorrichtung (42) und vor der Auskoppelfläche (44) eine weitere zweite Lichtumlenkvorrichtung (43) vorgesehen ist, um das Licht aus dem Lichtleiter (45) zu mindestens einem Lichtdetektor (36) zu emittieren.

5. Vorrichtung nach Anspruch 4, **dadurch gekennzeichnet, dass** das Licht im Wesentlichen senkrecht zu einer Ebene des Bodens (18) zu den Lichtdetektoren (36) emittiert wird.

6. Vorrichtung nach einem der vorhergehenden Ansprüche, **dadurch gekennzeichnet, dass** die Kapsel (15) vier Lichtleiter (45) aufweist, die jeweils von einer gemeinsamen Einkoppelfläche (41) zu einer Auskoppelfläche (44) führen.

7. Vorrichtung nach einem der vorhergehenden Ansprüche, **dadurch gekennzeichnet, dass** die Kapsel (15) vier Lichtleiter (45) aufweist, die jeweils von einer Einkoppelfläche (44) zu einer gemeinsamen Auskoppelfläche (41) führen.

8. Vorrichtung nach einem der vorhergehenden Ansprüche, **dadurch gekennzeichnet, dass** eine Positioniereinrichtung (19) vorgesehen ist, die mit einem Positioniermittel der Kapsel (15) zusammenwirkt, um die Kapsel (15) in einer vorbestimmten Position und Ausrichtung an der Brühkammer (6) anzuordnen.

9. Vorrichtung nach einem der vorhergehenden Ansprüche, **dadurch gekennzeichnet, dass** eine Steuerung vorgesehen ist, die basierend auf den Informationen der Lichtdetektoren (36) zumindest die Brühzeit und die Temperatur des in die Brühkammer (6) eingeleiteten Wassers steuert.

10. Kapsel (15) für eine Vorrichtung (1) nach einem der vorhergehenden Ansprüche, wobei die Kapsel (15) für einen Brühvorgang wirksame Substanzen aufweist, und die eine zumindest teilweise mit einer Brühkammer (6) im Verbindung bringbare Kapselöffnung (12) und einen Boden (18) gegenüber der Kapselöffnung (12) aufweist, **dadurch gekennzeichnet, dass** benachbart zu dem Boden (18) der Kapsel (15) mindestens eine Lichtquelle (40) vorsehbar ist, die an einer Eintrittsfläche (41) der Kapsel (15) Licht in den Boden (18) emittiert, wobei in dem Boden (18) mindestens ein Lichtleiter (45) vorgesehen ist, mittels dem das in den Boden (18) emittierte Licht zu mindestens einer Auskoppelfläche (44) am Boden (18) der Kapsel (15) geleitet wird und ein Lichtdetektor (36) gegenüber der mindestens einen Auskoppelfläche (44) anordnenbar ist.

11. Kapsel nach Anspruch 10, **dadurch gekennzeichnet, dass** eine Kapsel (15) an mindestens einer Eintrittsfläche (41) und/oder einer Auskoppelfläche (44) eine verminderte Lichtdurchlässigkeit aufweist.

12. Kapsel nach Anspruch 11, **dadurch gekennzeichnet, dass** die Lichtdurchlässigkeit durch eine Beschichtung (48), ein Etikett oder eine mechanische, thermische oder chemische Veränderung der Oberfläche der Auskoppelfläche (44) oder ein Licht brechendes Element in dem Lichtleiter (45) vermindert ist.

13. Kapsel nach Anspruch 10 oder 11, **dadurch gekennzeichnet, dass** die Kapsel (15) im Wesentlichen topfförmig ausgebildet ist und die Kapselöffnung (12) mit einem Sieb (31) oder Filterelement flüssigkeitsdurchlässig verschlossen ist.

14. Kapselsystem mit mehreren Kapseln (15) nach einem der Ansprüche 10 bis 13, die an den Auskoppelflächen oder Eintrittsflächen (44) unterschiedlich gestaltet sind.

15. Verfahren zur Herstellung eines Brühgetränkes, mit den folgenden Schritten:
- Eingeben einer Kapsel (15) in einen Einwurfschacht (7) und Anordnen der Kapsel (15) benachbart zu einer Brühkammer (6);
- Auslesen einer Codierung an der Kapsel (15), wobei benachbart zu einem Boden (18) der Kapsel (15) mindestens eine Lichtquelle (40) vorgesehen ist, die Licht in den Boden (18) emittiert, wobei in dem Boden (18) mindestens ein Lichtleiter (45) vorgesehen ist, mittels dem das in den Boden (18) emittierte Licht zu mindestens einer Auskoppelfläche (44) am Boden (18) der Kapsel (15) geleitet wird und ein Lichtdetektor (36) zum Auslesen der Codierung gegenüber der mindestens einen Auskoppelfläche (44) angeordnet ist,
- Einfüllen von heißem Wasser in die Brühkammer (6) zur Herstellung eines Brühgetränkes abhängig von der ausgelesenen Codierung.

16. Verfahren zur Herstellung eines Brühgetränkes nach Anspruch 15,
**dadurch gekennzeichnet, dass** mehrere Lichtquellen (40) vorgesehen sind, die nach dem Anordnen der Kapsel (15) benachbart zu der Brühkammer (6) nacheinander Licht an unterschiedlichen Stellen in den Boden (18) emittieren und das emittierte Licht an einen einzigen Lichtdetektor geleitet und erfasst wird.

## Claims

1. An apparatus (1) for preparing brewed beverages, comprising a brewing chamber (6), on which an inlet is provided for heated water and an outlet (22) for the brewed beverage, wherein the brewing chamber (6) has an opening (20) on which a capsule (15) can be arranged with substances effective for the brewing operation, the capsule having a capsule opening (12) which is connected at least in part to the brewing chamber (6) and a base (18) opposite the capsule opening (12), **characterized in that** at least one light source (40) is provided adjacent to the base (18) of the capsule (15), which light source emits light into the base (18) via an inlet surface (41), wherein at least one light conductor (45) is provided in the base (18), by means of which the light emitted into the base (18) is conducted to at least one light-output surface (44) on the base (18) of the capsule (15), and a light detector (36) is arranged opposite the at least one light-output surface (44).

2. An apparatus according to claim 1, **characterized in that** several light conductors (45) are provided in the base (18), by means of which light can be conducted from an inlet surface (41) to a light-output surface (44) on the base (18) of the capsule (15).

3. An apparatus according to claim 2, **characterized in that** a light deflection apparatus (42, 43) is provided in the base (18) of the capsule (15) adjacent to an inlet surface (41) and/or a light-output surface (44), by means of which the light of the light source (40) is introduced into a light conductor (45) or is emitted by the light conductor (45) to the light-output surface (44).

4. An apparatus according to one of the preceding claims, **characterized in that** a first light deflection apparatus (42) is provided in each light conductor (45) after the inlet surface (41) and a further second light deflection apparatus (43) is provided before the light-output surface (44) in order to emit the light from the light conductor (45) to at least one light detector (36).

5. An apparatus according to claim 4, **characterized in that** the light is emitted to the light detectors (36) substantially perpendicularly to a plane of the base (18).

6. An apparatus according to one of the preceding claims, **characterized in that** the capsule (15) comprises four light conductors (45) which each lead from a common inlet surface (41) to a light-output surface (44).

7. An apparatus according to one of the preceding claims, **characterized in that** the capsule (15) comprises four light conductors (45) which each lead from a light injection surface (44) to a common light-output surface (41).

8. An apparatus according to one of the preceding claims, **characterized in that** a positioning device (19) is provided which interacts with a positioning means of the capsule (15) in order to arrange the capsule (15) in a predetermined position and orientation on the brewing chamber (6).

9. An apparatus according to one of the preceding claims, **characterized in that** a controller is provided, which on the basis of the information of the light detectors (36) controls at least the brewing time and the temperature of the water introduced into the brewing chamber (6).

10. A capsule (15) for an apparatus (1) according to one of the preceding claims, whereby the capsule comprises substances effective for the brewing operation, the capsule having a capsule opening (12) which is connected at least in part to the brewing chamber (6) and a base (18) opposite the capsule opening (12), **characterized in that** at least one light source (40) can be provided adjacent to the base (18) of the capsule (15), which light source emits light into the base (18) via an inlet surface (41) at the capsule (15), wherein at least one light conductor (45) is provided in the base (18), by means of which the light emitted into the base (18) is conducted to at least one light-output surface (44) on the base (18) of the capsule (15), and a light detector (36) can be arranged opposite the at least one light-output surface (44).

11. A capsule according to claim 10, **characterized in that** a capsule (15) has reduced transparency on at least one inlet surface (41) and/or one light-output surface (44).

12. A capsule according to claim 11, **characterized in that** the transparency is reduced by a coating (48), a label or a mechanical, thermal or chemical change to the surface of the light-output surface (44), or a light-refractive element in the light conductor (45).

13. A capsule according to claim 10 or 11, **characterized in that** the capsule (15) is formed in a substantially cup-shaped manner and the capsule opening (12) is sealed in a liquid-permeable manner by a screen (31) or a filter element.

14. A capsule system comprising several capsules (15) according to one of the claims 10 to 13, which capsules (15) are formed in different ways on the light-output surfaces or inlet surfaces (44).

15. A method for preparing a brewed beverage, comprising the following steps:
- inserting a capsule (15) into an insertion chute (7) and arranging the capsule (15) adjacent to a brewing chamber (6);
- reading out a coding on the capsule (15), wherein at least one light source (40) which emits light into the base (18) is provided adjacent to a base (18) of the capsule (15), wherein at least one light conductor (45) is provided in the base (18), by means of which the light emitted into the base (18) is conducted to at least one light-output surface (44) on the base (18) of the capsule (15), and a light detector (36) for reading out the coding is arranged opposite the at least one light-output surface (44);
- filling hot water into the brewing chamber (6) for preparing a brewed beverage depending on the read coding.

16. A method for preparing a brewed beverage according to claim 15, **characterized in that** several light sources (40) are provided, which after the arrangement of the capsule (15) adjacent to the brewing chamber (6) successively emit light at different points into the base (18) and the emitted light is conducted to and detected by a single light detector.

## Revendications

1. Dispositif (1) pour préparer des boissons infusées comprenant une chambre d'infusion (6) munie d'une entrée d'eau chaude et d'une sortie (22) de la boisson infusée,
- la chambre d'infusion (6) ayant une ouverture (20) recevant une capsule (15) contenant des substances actives pour l'infusion, et une ouverture de capsule (12) communiquant au moins partiellement avec la chambre d'infusion (6) ainsi qu'un fond (18) à l'opposé de l'ouverture (12) de la capsule,
dispositif **caractérisé en ce qu'**il comporte
au moins une source lumineuse (40) au voisinage du fond (18) de la capsule (15), cette source lumineuse émettant de la lumière dans une surface d'entrée (41) du fond (18),
- le fond (18) ayant au moins un guide de lumière (45) qui dirige la lumière émise dans le fond (18) vers au moins une surface de découplage (44) du fond (18) de la capsule (15), et
un photodétecteur (36) prévu à l'opposé d'au moins une surface de découplage (44).

2. Dispositif selon la revendication 1,
**caractérisé en ce que**
le fond (18) est équipé de plusieurs guides de lumière (45) qui guident la lumière émise par une surface d'entrée (41) vers une surface de découplage (44) du fond (18) de la capsule (15).

3. Dispositif selon la revendication 2,
**caractérisé en ce que**
au voisinage d'une surface d'entrée (41) et/ou d'une surface de découplage (44), le fond (18) et la capsule (15) comportent un dispositif de déviation de lumière (42, 43) qui dirige la lumière de la source lumineuse (40) dans un guide de lumière (45) ou émet la lumière du guide de lumière (45) sur la surface de découplage (44).

4. Dispositif selon l'une des revendications précédentes,
**caractérisé en ce que**
dans chaque guide de lumière (45), il y a après la surface d'entrée (41) un premier dispositif de déviation de lumière (42) et avant la surface de découplage (44), un second dispositif de déviation de lumière (43) pour émettre la lumière du guide de lumière (45) vers au moins un photodétecteur (36).

5. Dispositif selon la revendication 4,
**caractérisé en ce que**
la lumière est émise pratiquement perpendiculairement au plan du fond (18) vers les photodétecteurs (36).

6. Dispositif selon l'une des revendications précédentes,
**caractérisé en ce que**
la capsule (15) comporte quatre guides de lumière (45) qui vont chaque fois à partir d'une surface de couplage d'entrée (41) commune vers une surface de découplage (44).

7. Dispositif selon l'une des revendications précédentes,
**caractérisé en ce que**
la capsule (15) comporte quatre guides de lumière (45) allant respectivement d'une surface de couplage d'entrée (44) vers une surface de découplage (41) commune.

8. Dispositif selon l'une des revendications précédentes,
**caractérisé en ce qu'**il comporte
un dispositif de positionnement (19) coopérant avec un moyen de positionnement de la capsule (15) pour mettre la capsule (15) dans une position et une orientation prédéfinies par rapport à la chambre d'infusion (6).

9. Dispositif selon l'une des revendications précédentes,
**caractérisé en ce qu'**il comporte
une commande fondée sur les informations des photodétecteurs (36) pour commander au moins la durée d'infusion et la température de l'eau introduite dans la chambre d'infusion (6).

10. Capsule (15) pour un dispositif (1) selon l'une des revendications précédentes,
- la capsule (15) contenant des substances actives pour une infusion et ayant une ouverture de capsule (12) qui communique au moins en partie avec la chambre d'infusion (6) ainsi qu'un fond (18) à l'opposé de l'ouverture (12) de la capsule,
capsule **caractérisée en ce que**
au voisinage du fond (18) de la capsule (15) il est prévu au moins une source lumineuse (40) qui émet de la lumière dans le fond (18) par une surface d'entrée (41) de la capsule (15),
- le fond (18) comportant au moins un guide de lumière (45) par lequel la lumière émise est conduite dans le fond (18) vers au moins une surface de découplage (44) du fond (18) de la capsule (15) ainsi qu'un photodétecteur (36) à l'opposé d'au moins une surface de découplage (44).

11. Capsule selon la revendication 10,
**caractérisé en ce qu'**elle a
une transparence réduite pour la lumière sur au moins une surface d'entrée (41) et/ou une surface de découplage (44).

12. Capsule selon la revendication 11,
**caractérisé en ce que**
la transparence est réduite par un revêtement (48), une étiquette ou une modification mécanique ou thermique ou chimique de la surface de découplage (44) ou encore d'un élément de réfraction dans le guide de lumière (45).

13. Capsule selon la revendication 10 ou 11,
**caractérisée en ce que**
elle est pratiquement en forme de goutte d'eau et l'ouverture de la capsule (12) est fermée de façon étanche aux liquides par un tamis (31) ou un élément de filtre.

14. Système de capsule comprenant plusieurs capsules (15) selon l'une des revendications 10 à 13, ayant des surfaces de découplage ou des surfaces d'entrée (44) de formes différentes.

15. Procédé pour réaliser une boisson infusée comprenant les étapes suivantes consistant à :
- placer une capsule (15) dans une trémie d'entrée (7) et mettre la capsule (15) au voisinage d'une chambre d'infusion (6),
- lire le codage de la capsule (15),
* au moins une source lumineuse (40) étant prévue au voisinage du fond (18) de la capsule (15) pour émettre de la lumière dans le fond (18),
* le fond (18) ayant au moins un guide de lumière (45) qui guide la lumière émise dans le fond (18) vers au moins une surface de découplage (44) du fond (18) de la capsule (15) et un photodétecteur (36) pour lire le codage face à au moins une surface de découplage (44),
- introduire le l'eau chaude dans la chambre d'infusion (6) pour obtenir une boisson infusée en fonction du codage lu.

16. Procédé d'obtention d'une boisson infusée selon la revendication 15, **caractérisé en ce que**
plusieurs sources lumineuses (40) sont prévues qui, après mise en place de la capsule (15) au voisinage de la chambre d'infusion (6), émettent successivement de la lumière en différents endroits du fond (18) et conduisent la lumière sur un unique photodétecteur pour la saisir.
